# EUROPEAN PATENT APPLICATION

(11) **EP 1 394 747 A1**
(43) Date of publication of application: **03.03.2004**
(21) Application number: 03255316.6
(22) Date of filing: 27.08.2003
(51) Int. Cl.: G06T 11/00

(54) **Method for displaying an object by synchronized image reconstruction**

(30) Priority: 27.08.2002 FR 0210639
(71) Applicant: GE Medical Systems Global Technology Company LLC, Waukesha, Wisconsin 53188-1696 (US)
(72) Inventor: Launay, Laurent, 78470 Saint Remy Les Chevreuse (FR); Knoplioch, Jerome, 92200 Neuilly-sur Seine (FR); Okerlund, Darin R., Muskego Wisconsin 53150 (US)
(74) Representative: Goode, Ian Roy

(57) **Abstract**

A composite image of an artery is produced by reconstruction synchronized after a scanner acquires (101) data during an examination, the data being acquired from several phases of a cardiac cycle. The data is extracted locally, the localization corresponding to the section of the artery for which it is desired to improve the quality of the image. The localization is obtained through a plotting (103) of the artery in a selected volume image (102). An image is obtained (105-107) in which each section of the artery is displayed on the basis of data coming from the phase of the cardiac cycle most appropriate to the display of this section.

## Description

The invention is directed to a method for displaying an object by synchronized image reconstruction. More particularly, the invention is directed to medical imaging and, more particularly, to imaging of a blood vessel. More specifically, the field of the invention is that of cardiac imaging, namely the production of images of the heart.

The known methods of synchronized cardiac reconstruction by ECG (electrocardiogram) minimize alterations (artifacts or breaks) due to cardiac movements. These cardiac movements are due not only to the heartbeats but also to the possible movements, even minute ones, of the patient during the acquisition of information, as well as to the patient's breathing. In the known methods, images of the heart are acquired during the diastolic phase when the heart is relatively at rest, by specifying a phase localization (namely a percentage pertaining to the R-to-R interval which is an interval corresponding to a full cardiac cycle) appropriate for the diastole.

However, even with phase localization, the alterations are present because of various factors: the ECG signal is an indirect means of measuring the movements of the heart, the heart does not undergo alteration in the same space from one beat to another (namely, from one cardiac cycle to the next one), the time resolution may be unsuitable in the event of a high heart rate, etc.

These parameters affect the quality of the resulting images because the data are acquired over several heartbeats. The information is acquired by sensors performing a helical motion around the patient and hence around the heart. The motion of the sensor is subjected to both mechanical and signalprocessing constraints that cause the sensor to be limited in its rotational and translation speeds. The sensor is also limited in its spatial dynamics. This means that the sensor has a certain width and can acquire information only in this width. The images of the heart are therefore acquired in successive and adjacent slices. In practice, these slices are axial. The reconstruction of a full image of the heart requires the use of information pertaining to all the slices. The only consistency that exists between these different pieces of information is a consistency of the phase of the cardiac cycle as the acquisition is synchronized with this heart rate. Thus, all the parameters cited here above have an effect during the reconstruction of an image of the heart that is reconstructed de facto on the basis of information extending over approximately 30 heartbeats at a normal heart rate. In practice, each slice is a superimposition of N elementary images. The number of elementary images per slice depends both on the structure of the sensor and on the parameters of the examination, especially the pitch of the helix described by the sensor about the organ to be imaged.
In the known methods, the mode of acquisition of the information is by slice. Each slice has a spatial thickness depending on the spatial resolution of the sensor used. For each slice, there is information available on the state of the heart for the phases of the cardiac cycle for which the operator has decided to perform the examination. In practice, all the slices used to reconstitute a full image of the heart cannot be taken during the same heartbeat because this depends both on the speed of the heartbeat and the speed at which the scanner acquires information. This fact gives rise to artifacts during the production of images extending over several slices, and therefore over several beats. An artifact is a discontinuity or break, or an alteration, in an element from one slice to an adjacent slice. An element is, for example, a vessel, a wall of an organ etc.

It has been observed that this problem of the appearance of artifacts is especially present when it is sought to display the right coronary artery. The right coronary artery extends in the coronary and/or sagittal planes. Information from several axial slices is therefore needed to produce a full image of the right coronary artery. In addition to this anatomical aspect, the segments of the artery are not necessarily all at rest in the same phase of the cardiac cycle. All these factors mean that it is very difficult to have a reliable image of the right coronary artery.

In an embodiment of the invention, these problems are resolved by the identification of an object, such as a blood vessel, in a flattened sectional view, the production of which has been made possible by the slices. Each displayed zone of the vessel corresponds to a piece of information extracted from a slice of a volume image acquired during the examination by the scanner. Each zone of the vessel also corresponds to a determined point or dot during a plotting of this vessel in the volume image acquired during the examination. A point is also called a voxel. A voxel has coordinates in the volume image. A voxel is to a volume image what a pixel is to a plane image. It is possible to associate spatial coordinates with a slice. When the vessels are plotted, a volume image corresponding to a phase of the cardiac cycle is used. For each zone of the image displayed in a flattened section of the blood vessel, it is therefore possible to determine the slice, and more specifically the zone of the slice, from which the information used to produce this image has been extracted, as well as the phase of the cardiac cycle during which this information has been extracted.

In an embodiment of the invention, a zone of the blood vessel displayed in a flattened section is selected and, for this zone, the initial slice is replaced by another slice corresponding to another phase of the cardiac cycle for the same zone. Once this substitution has been made, a new image in flattened section is obtained. This image is possibly of better quality than the one obtained with the information derived from the initial slice corresponding to the first phase. This substitution can be done with all the phases acquired during the examination. When each of these different images thus produced is displayed, a decision is taken to choose the one that is the best representation of the vessel. This decision can be taken, for example, according to a criterion of variation of the diameter of the vessel, or according to a criterion of continuity of the walls of the vessel, or according to any other criterion. This substitution is either done manually by a practitioner or automatically by means of a software program. This substitution may concern one or more zones of the vessel.

In an embodiment of the invention a method for displaying an object after a synchronized reconstruction of an image of the object in which:
sets of volume images of the object are produced, this production of images being obtained by synchronized reconstruction and corresponding to different phases of a cycle;
a volume image corresponding to a phase of the cycle is selected;
   in the selected volume image, the object to be displayed is plotted,
   a section for display is made, in the selected volume image, from the result of the plotting;
the result of the section for display is flattened to obtain an elongated image of the object;
at least one zone of the flattened image of the object is selected, the selected zone corresponding to a slice of the object, the selection being made as a function of a discontinuity of the object, at the level of the zone, with at least one of the adjacent zones;
the selected slice is replaced, through the zone, by a slice corresponding to a second phase that is different from the first one, of the cycle for the first zone of the object;
the replacement is repeated until the slice revealing the smallest discontinuity of the object is found.

The invention and embodiments thereof will be understood more clearly from the following description and from the accompanying figures, in which:
Figure 1 shows a sequencing of steps of the method;
Figure 2 illustrates a volume image;
Figures 3a and 3b illustrate an artery in a zone of the volume image and a view of the artery in a flattened section; and
Figures 4a and 4b illustrate a flattened section view of an artery, and of a measurement of its diameter.

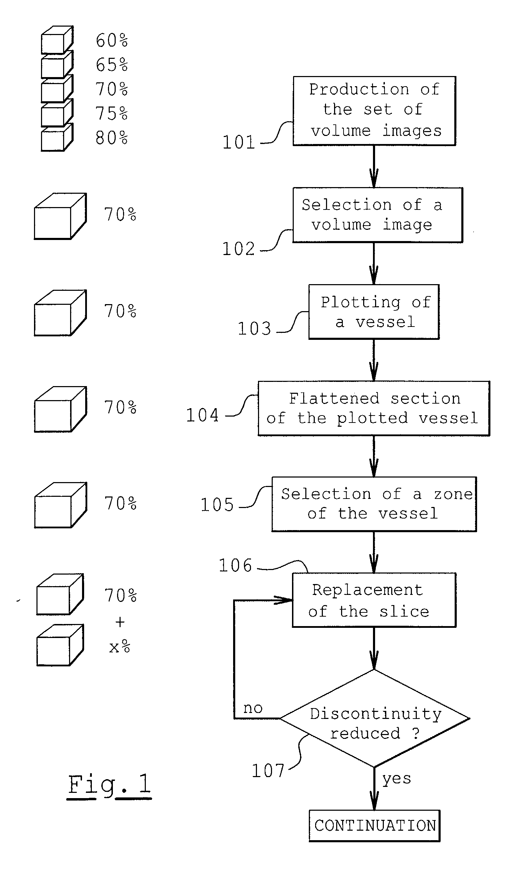

Figure 1 shows a preliminary step 101 for the production of a set of volume images. During the step 101 a patient reclines on an examination table where a scanner will acquire information in axial slices. The practitioner has parametrized the scanner so that it acquires information at certain phases of the cardiac cycle. The sensor of the scanner moves about the patient in a helix whose axis is parallel to the patient. The periods of activity of the sensor are synchronized with the patient's electrocardiogram. This enables the information acquired to be localized in the phase of the cardiac cycle. Furthermore, the information acquired is spatially localized through the position of the sensor.

At the end of the examination, and hence The step 101, the data acquired by the scanner, or data acquired by means connected to the scanner, possesses a number of pieces of information sufficient to produce volume images corresponding to the phases of the cardiac cycle in which the practitioner wishes to observe the heart.

A volume image is a cloud of points, or voxels, in which each voxel can be referenced by Cartesian coordinates. Each voxel has a radiological density associated with it. The density of voxels per cubic centimeter depends on the resolution of the scanner. To reveal the vessels, a substance can be injected into the patient such that it modifies the radiological density of the vessels when present in the blood. It is thus easier to isolate the vessels in the volume image obtained after the scanner.

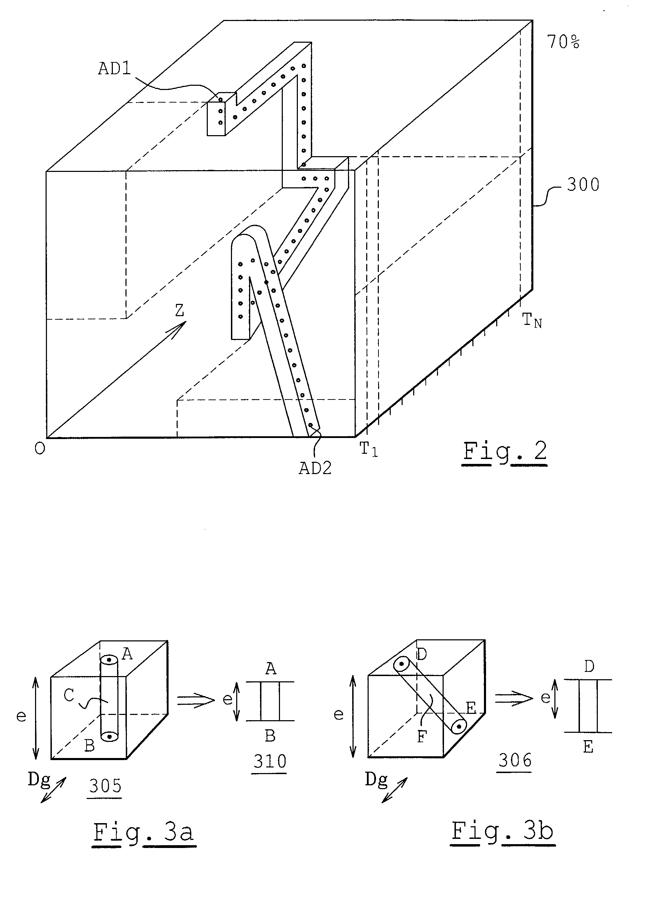

Figure 2 provides a diagrammatic view of a volume image. The image of Figure 2 corresponds, for example, to the 70% phase of the cardiac cycle. Figure 2 shows a cube in which each of the points can be referenced in a Cartesian referential system. In practice, a volume image is a cloud of points. Here, it has been chosen to depict a cube to facilitate viewing in space. Each voxel of the volume image thus belongs to a slice, the volume image comprising several adjacent slices and the number of slices depending on the spatial dynamics of the sensor. In other words, the wider the sensor, the thicker the slices and the fewer are the slices needed to make a full volume image of the organ analyzed. In the example, the slices are considered to be perpendicular to an axis O-Z going from the front of the cube to its rear.

The information by which a slice can be constituted is acquired during a heartbeat. A volume therefore extends in time over as many heartbeats as there are slices in the volume image.

A phase of the cardiac cycle is expressed/localized in terms of percentage of this cycle. For example, the diastole corresponds to a phase of about 70%. In general, the phases are distinguished every 5%. It is possible to make an acquisition for the 60, 65, 70, 75 and 80% phases of the cardiac cycle (see, for example, Figure 1). Hence, after examination, five volume images representing the heart are obtained, each in one of the above-mentioned phases of the cardiac cycle. It can be seen that it is possible to obtain information for all the phases of the cardiac cycle. It is also possible to localize a phase with any percentage fraction whatsoever, for example 58.4% or 30.2% and so on.

From the step 101, the operation proceeds to step 102 for the selection of a volume image among those acquired during the examination. The information required by the scanner is transmitted to a computer. This computer is connected to the scanner so as to receive the information required by the scanner. This computer comprises all the means (microprocessor, memories, input/output peripherals etc.) used to process the information required by the scanner and implement the steps of the method according to the invention. In practice, the scanner may also comprise means for acquiring data and means for transmitting volume images to the computer.

The computer can process this information and present it to the user on a means for display, such as a screen. The user interacts with the program for presenting information acquired by the scanner through peripherals such as a mouse, a keyboard, a light pen or the like. The actions of the user of the software for presenting images on the peripherals are displayed on the screen. Thus, at the end of the examination, the user may select one of the five volume images that have been acquired in the present example. In practice, it is possible to acquire volume images for all the phases of the cardiac cycle. In the present example, the user will choose the volume image corresponding to the 70% phase of the cardiac cycle. It is at this phase that the right corollary artery is considered to be most at rest. In the case of the examination of another artery or vein, or possibly an organ other than the heart, another phase of the cardiac cycle may be chosen. The only constraint is that the information corresponding to this phase should have been acquired during examination by the scanner. In other words, all that can be displayed is data or information acquired during the examination of the patient.

At this step, the user displays a 3D display of the patient's heart on a screen. The method then proceeds to step 103 for the plotting of a vessel. In step 103, with an aiming device, the user can select points on the image presented on the screen. The user then selects a point AD1 corresponding to an end of the right coronary artery and a second point AD2 corresponding to the other end of the right coronary artery. The 3D display mode of the heart makes it possible to rotate the image on the screen along any axis. It is therefore easy to select the points AD1 and AD2. These points AD1 and AD2 actually correspond to coordinates in the volume image. Once these two points are selected, the user launches the plotting program. The plotting program determines a path in the volume image connecting the two points AD1 and AD2. The path between AD1 and AD2 is determined, for example, from AD1. The passage from AD1 to the next point/voxel is made in minimizing or maximizing a cost function with respect to the voxels neighboring AD1. This cost function comprises, for example, in maximizing the resemblance at the level of the radiological density from one point to the other. The process is repeated until AD2 is reached. The result of the plotting is a plotted line. A plotted line comprises a set of adjacent voxels such that they form a continuous curve between AD1 and AD2. The result of the plotted line actually corresponds to the routing of the right coronary artery in the volume image. The volume image used to plot the artery is consistent in phase, i.e., all the slices that form it correspond to the same phase of the cardiac cycle.

From step 103, the process proceeds to step 104 for the production of an image of a flattened section of the vessel plotted. Figures 3a and 3b show volume sub-images 305 and 306 of the volume image 300 of Figure 2. Figure 3a shows three points A, B, C, for the plotted line determined at step 103. These points are either three consecutive points or, for the points A, B, two points of the plotted line separated by a number of predetermined points, namely two points of the plotted line at a predetermined distance from each other. The third point C is then the point located at mid-distance between the two points A and B.

An image in the form of a flattened curve is produced from a direction Dg of generation. For each point of the plotted line, a straight line is determined passing through this point and parallel to the direction of generation. Thus, a bundle of adjacent straight lines are obtained, the points of the plotted line being adjacent, and this bundle of straight lines can be stretched in a direction orthogonal to Dg to obtain a plane. Each straight line of the bundle intercepts voxels of the volume image. It is these voxels that are used to produce a flattened-curve image. A flattened-curve image therefore comprises as many lines, superimposed on the screen, as there are points in the plotted line.

If Figures 3a and 3b each represent a section with a thickness e, then it can be seen that, depending on the angle formed between the direction Dg of generation and the routing of the vessel in the slice, it is necessary to have a greater or a smaller number of straight lines parallel to Dg to obtain a flat-curve depiction of a slice. Generally, the smaller the angle formed by the vessel with the direction of generation, the greater the number of straight lines needed. This observation explains that, although the slices all have the same thickness, the flattened-curve depiction may reveal the fact that certain slices are thicker than others. This is another way of stating the vessel extends further in certain slices than in others.

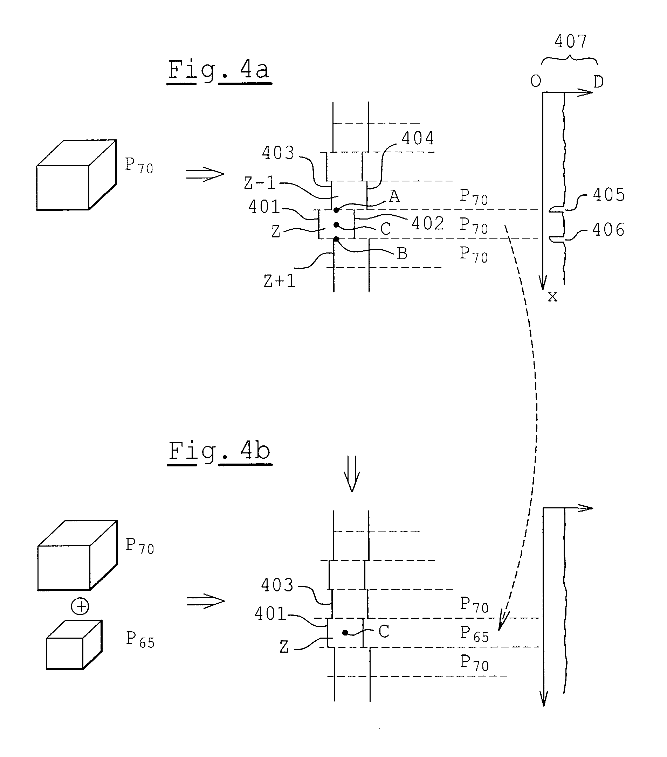

The result of the step 104 is therefore, as displayed on the screen, an image of the vessel that has been plotted in the step 103. As a result of the method of its production, this image reveals a certain number of zones as shown in Figure 4a. Each of these zones corresponds to the interception of a section of the artery by a slice. Since each slice corresponds to a different cardiac cycle, the flattened image reveals a certain number of artifacts and/or discontinuities. With an aiming device, the user can select one of these zones, for example the zone Z. The user selects this slice because, visually, there is a major gap between the walls 401 and 402 respectively, of the artery shown in the zone Z and between the walls 403 and 404 respectively of the artery shown in the zone Z-1 adjacent to the zone Z. The zone Z is associated with the plotted line, through the coordinates of the points A, B or C, hence with voxels having coordinates in a volume image. The zone Z is also associated with a phase of the cardiac cycle. Once the zone Z has been selected, in step 105, the method proceeds to step 106: the substitution/replacement of the slice.
In step 106, new voxels are extracted from a slice coming from a volume image corresponding to a phase of the cardiac cycle other than the phase of the cardiac cycle used to make the plotted line. In the present example, Figure 4a corresponds to the 70% phase. We shall therefore choose, for example, the 65% phase. The selection of a zone Z enables a search to be made in the volume image corresponding to the 65% phase for the voxels having the same coordinates as those extracted from the volume image at 70% to produce the image of the zone Z as in Figure 4a. The voxels extracted from the volume image at 70% and from the volume image at 65% are therefore spatially consistent for the zone Z. The extraction of the voxels from the volume images is therefore local, and localized at the artery section represented by the zone Z.

Using voxels extracted from the volume image at 65%, for the zone Z, a new flattened, elongated image is therefore obtained of the artery for the zone Z. The full image of the artery shown in Figure 4b comprises this time of information coming both from the volume image of the 70% phase for all the zones except the zone Z and from the volume image of the 65% phase for the zone Z. Once the new complete image has been produced, it is then possible to observe the continuity of the walls at the zone Z. The operations of substitution can be repeated for all the other phases that have been acquired during the examination. It is then possible to visually determine the composite complete image that has the best rendition. The best rendition corresponds in fact to a minimum of discontinuities and/or alterations for the walls of the artery. A description has been given of the substitution made with information coming from the volume image of the 65% phase. It is clearly possible to make the substitution on the basis of any volume image corresponding to a phase of the cardiac cycle for which the examination has provided information. Thus, in the present example, the substitution has been made on the basis of information coming from the 60, 65, 70, 75 and 80% phases of the cardiac cycle. This substitution can also be made for all the zones of the artery.

The full image is described as a composite because, depending on the zone of the artery considered, information extracted from the different volume images has been used, each volume image corresponding to a phase of the cardiac cycle. It can be noted here that if a slice has several sections of straight coronary artery, the depiction on the screen of all the sections can be done on the basis of information extracted from different phases of the cardiac cycle. In other words although they form part of the same slice, these sections displayed on the screen are not all necessarily displayed from voxels coming from the same volume image. This is partly justified by the fact that not all the sections of the right coronary artery are addressed during the same phase of the cardiac cycle.

Step 106 is repeated, within the limits of the information available for the zone Z, until the discontinuity is reduced to the utmost extent: this is the iteration of step 107.

Once the zone Z has been selected, the most appropriate phase for this zone can be selected automatically. This determination is done according to a criterion that may be variable. For example, it may be based on the variations measured on the flattened-curve image of the diameter of the artery. This diameter is measured from the same principles as those used to determine the plotted line through a volume image. These principles are then applied to a segment to be determined among the pixels. In Figure 4a it is possible to plot a straight line O-x perpendicular to the slices. It is then possible, for any point of the straight line, to determine the diameter D of the artery. This straight line faces the depiction of the artery. An abscissa on this straight line O-x therefore corresponds to a zone of the artery. The diameter of the artery is, for example, the distance of a straight-line segment going from one wall to the other. This segment is plotted on the image in a flattened section. The operation starts from a wall of the artery and the shortest path is found, from pixel to pixel, until the opposite wall. The operation passes from one pixel to the next one in minimizing (on maximizing) a cost function in relation to the pixels surrounding the current pixel. The diameter is then directly proportional to the number of pixels constituting the segment. A sharp variation, such as 405 or 406, in the diameter of the artery, for two neighboring points of the wall of the artery, then corresponds to an artifact. For the flattened sectional view, the term used is "pixel" because we are in a plane and no longer in a volume.

In another embodiment to determine the diameter of the artery comprises using the point of the plotted line determined by an abscissa on the straight line O-x. This point then corresponds to coordinates in the volume image. For this point, it is possible to determine a plane that is perpendicular to the plotted line and intercepts the volume image. In this plane, comprising a section of the vessel, the frontiers of the vessel are then determined. Starting from the frontiers of the vessel, several diameters are determined and from these, the smallest, the greatest or the mean is chosen.

Once the artifact has been localized, the voxels of the zone Z to which the artifacts belong are automatically replaced by voxels available from among one of the volume images corresponding to one of the phases among the phases for which information has been acquired during the examination. Then the operation determines which is the volume image, namely the phase for which the measured artifact is the smallest at the zone Z. It is desirable, for example, to have a curve 407 with the diameter that is as homogeneous as possible. Thus, information is obtained on the phase that must be used to have a flattened curve display minimizing the artifact for the zone Z.

Another embodiment for the automatic determination comprises assessing the discontinuity for the walls of the artery. Just as it is possible to determine the diameter of the artery, it is possible to determine the coordinates of its walls. If, between two successive pixels along a straight line perpendicular to the slices, the pixels corresponding to the wall are far too distant, then an artifact has been detected. A replacement is then carried out as here above, so as to minimize the distance between the pixels corresponding to the wall.

There are still other embodiments for quantifying the artifact. The phase to be used to produce a flattened curve image of the artery zone for which an artifact has been detected is then selected by minimizing this quantification. The quantifications referred to by way of an example are sudden change in the diameter curve and discontinuity in the walls. Another quantification would also be appropriate. The zone Z is selected by means of a pointer. This pointer is represented on the screen by a dot having a color different from the one used to represent the artery. With a view to simplification of the interface presented to the user, the only points that the user can select are those corresponding to the plotted line. Since the points of the plotted line form part of the artery, it is thus ensured that there is no ambiguity over the zone of they artery selected. Indeed, through this procedure, the display revealing the zone of the selected artery is made by the display of a symbol directly on the flattened curve representation of the artery. The symbol itself is then in the depiction of the artery itself.

It is possible, manually or automatically, to optimize the display of the zone of the artery. In practice, it is also possible to optimize the display of several consecutive zones, or of the entire artery. The optimizing of the entire artery is done by repeating the optimizing steps for each zone of the artery. In other words, for each zone of the artery, a search is made for that volume image with the information that gives the best rendition (namely, minimizes the artifacts) for the zone. Simplifying the description to the utmost extent, consider an artery with three zones and examination that has been made for two phases, P1 and P2, of the cardiac cycle. Then, for each zone of the artery, there are two possibilities of information sources. This gives 2^3 for the image in flattened section. The plotted line is made in the volume image corresponding to P1. Following the plotting, a flattened curve image is obtained. This image is described by P1-P1-P1. This means that the information used to display each of three zones comes from the volume image corresponding to P1. During the optimization, the following will be studied: P1-P1-P1, P2-P1-P1, P1-P2-P1, P2-P2-P1, P1-P1-P2, P2-P1-P2, P1-P2-P2, and P2-P2-P2. The image among these eight images having the least artifacts is determined. This is the image having the best rendition. If an example is considered with 30 zones and examination made for six phases, the number of possibilities to be explored is then equal to 6^30.

Another embodiment of analysis comprises comparing P1-P1-P1 to P2-P1-P1 to select the best image among these two. When Pa-P1-P1 is obtained, where Pa is chosen from among P1 and P2 to have the best rendition in Pa-P1-P1. At the following step Pa-P1-P1 are compared with Pa-P2-P1. The best image will then be Pa-Pb-P1. The selection is thus propagated to all the zones of the artery and then an image Pa-Pb-Pc is obtained with a better rendition than P1-P1-P1. In one variant, the three zones could also be optimized separately. This is to say that, for each zone, the operation starts from P1-P1-P1 to determine the adequate phase for each zone. In both these cases, if we consider an example where there are 30 zones and an examination made for six phases, the number of possibilities to be explored is then equal to 6 x 30.

The description is directed to the examination of a heart after the acquisition of information synchronized with the electrocardiogram of the heart. In practice, it would have been possible to display another organ, such as the lungs, for example, to which the technique is suited because this organ is subject to movements during examination. The acquisition can also be synchronized with a cycle other than the cardiac cycle. It is possible to consider, for example, a respiratory cycle.

Similarly, the description is directed to the right coronary artery, but it would have been equally possible to describe a left coronary artery, another artery or another vein.

In a variation of the invention, the volume images used are limited to making the substitutions for the images that are neighbors, in phase, of the volume image used to make the trace. In other words if, during an examination, images have been acquired corresponding to the 60, 65, 70, 75, and 80% phases and if the trace is made on the image at 70%, then only the images at 65, 70 and 75% will be used. In this case, the notion of neighborhood may be extended to a percentage swing around the phase used to make the trace.

The invention and embodiments thereof provides an improved display of objects, particularly blood vessels. The invention and embodiments thereof reduces artifacts (namely the discontinuities or alterations) caused by the information-acquisition modes used to reconstruct the image. The invention and embodiments thereof produce an image with a minimum number of artifacts of the right coronary artery. The invention and embodiments thereof improve the display of the blood vessels in the sagittal or coronary planes.

## Claims

1. A method for displaying an object, in which:
a. sets of volume images of the object are produced (101) by synchronized reconstruction and corresponding to different phases of a cycle;
b. a volume image corresponding to a phase of the cycle is selected (102);
c. in the selected volume image, the object to be displayed is plotted (103);
d. a section for display is made (104), in the selected volume image (300), according to the result of the plotting;
e. the result of the section for display (104) is flattened to obtain an elongated image of the object;
f. at least one zone of the flattened image of the object is selected (105), the selected zone corresponding to a slice of the object, the selection being made as a function of a discontinuity of the object, at the level of the zone, with at least one of the adjacent zones;
g. the selected slice is replaced (106), through the zone, by a slice corresponding to a second phase that is different from the first one, of the cycle for the first zone of the object; and
h. the replacement is repeated (107) until the slice revealing the smallest discontinuity of the object is found.

2. The method according to claim 1 wherein the replacement of the selected slice is automatic, depending on a function of measurement of the discontinuity in the region of the intersection (401-403) of the plotted line and of the selected slice.

3. The method according to claim 2 wherein the measurement of discontinuity is based on a measurement of the diameter of the object.

4. The method according to claim 2 wherein the measurement of discontinuity is based on the detection of a break (401,403) in the wall of the object.

5. The method according to claim 1 wherein the replacement of the selected slice is manual as a function of a visual appreciation of discontinuity.

6. The method according to one of the claims 1 to 5 wherein the plotted line is made from a volume image that is consistent at the phase of the cycle.

7. The method according to one of the claims 1 to 6 wherein a slice is selected by positioning of a pointer at the level of the zone to be replaced.

8. The method according to claim 7 wherein the pointer is positioned on a point of the plotted line.

9. A computer program product comprising a computer usable medium having computer readable program code means embodied in the medium for use with an apparatus for displaying an object, the computer program product comprising:
a. computer readable program code means embodied in the medium for causing a computer to provide sets of volume images of the object (101) by synchronized reconstruction and corresponding to different phases of a cycle;
b. computer readable program code means embodied in the medium for causing a computer to provide a volume image corresponding to a phase of the selected cycle (102);
c. computer readable program code means embodied in the medium for causing a computer to provide in the selected volume image, a plotting of the object to be displayed (103);
d. computer readable program code means embodied in the medium for causing a computer to provide a section for display (104), in the selected volume image (300), according to the result of the plotting;
e. computer readable program code means embodied in the medium for causing a computer to provide the result of the section for display (104) flattened to obtain an elongated image of the object;
f. computer readable program code means embodied in the medium for causing a computer to provide at least selected one zone of the flattened image of the object (105), the selected zone corresponding to a slice of the object, the selection being made as a function of a discontinuity of the object, at the level of the zone, with at least one of the adjacent zones;
g. computer readable program code means embodied in the medium for causing a computer to provide for replacement of the selected slice (106), through the zone, by a slice corresponding to a second phase that is different from the first one, of the cycle for the first zone of the object; and
h. computer readable program code means embodied in the medium for causing a computer to provide repeated replacement (107) until the slice revealing the smallest discontinuity of the object is found.

10. A program storage device readable by a machine, tangibly embodying a program of instructions executable by the machine to perform method steps for displaying an object, the method steps comprising:
a. sets of volume images of the object are produced (101) by synchronized reconstruction and corresponding to different phases of a cycle;
b. a volume image corresponding to a phase of the cycle is selected (102);
c. in the selected volume image, the object to be displayed is plotted (103);
d. a section for display is made (104), in the selected volume image (300), according to the result of the plotting;
e. the result of the section for display (104) is flattened to obtain an elongated image of the object;
f. at least one zone of the flattened image of the object is selected (105), the selected zone corresponding to a slice of the object, the selection being made as a function of a discontinuity of the object, at the level of the zone, with at least one of the adjacent zones;
g. the selected slice is replaced (106), through the zone, by a slice corresponding to a second phase that is different from the first one, of the cycle for the first zone of the object; and
h. the replacement is repeated (107) until the slice revealing the smallest discontinuity of the object is found.
